# EUROPEAN PATENT APPLICATION

(11) **EP 4 793 995 A1**
(43) Date of publication of application: **19.08.2026**
(21) Application number: 25887436.1
(22) Date of filing: 27.06.2025

(54) **SECONDARY BATTERY AND ELECTRIC DEVICE**

(30) Priority: 30.12.2024 CN 202411964480
(71) Applicant: Huizhou Liwinon New Energy Technology Co., Ltd., Huizhou, Guangdong 516100 (CN)
(72) Inventor: XIONG, Wei, Huizhou, Guangdong 516000 (CN); LV, Qian, Huizhou, Guangdong 516000 (CN); MA, Bin, Huizhou, Guangdong 516000 (CN)
(74) Representative: Metida
(86) International application number: PCT/CN2025/104159
(87) International publication number: WO 2026/144043

(57) **Abstract**

The present disclosure relates to a secondary battery and an electrical device. The secondary battery satisfies a relationship as follows: 0.3 ≤ A/[100×(N+100P)] ≤ 25; where A, in ppm, represents a mass content of the Al element in the positive electrode active material; P, in %, represents a weight percentage of the pyridine-based additive in the electrolyte; and N, in %, represents a weight percentage of the nitrile-based additive in the electrolyte. By correlating and defining the relationship between the key additives in the electrolyte and the Al content in the positive electrode active material, the present disclosure can effectively enhance the complexation between the nitrile-based and pyridine-based additives in the electrolyte and the positive electrode active material, thereby improving the film-forming stability of the battery during charging, and thus significantly enhancing the high-temperature stability of the battery.

## Description

### TECHNICAL FIELD

The present disclosure relates to the field of battery technology, and in particular to a secondary battery and an electrical device.

### BACKGROUND

Since the commercialization of lithium-ion batteries, lithium cobalt oxide (LiCoO₂) has become a preferred positive electrode material for lithium-ion batteries used in portable consumer electronics, due to its advantages such as a high compaction density and a high capacity. Developing a lithium cobalt oxide battery with a higher energy density can be achieved by increasing an upper voltage limit of a positive electrode.

In recent years, researchers have turned to silicon as a negative electrode material, which has a higher specific capacity (4200 mAh/g) than graphite (372 mAh/g), to increase the volumetric energy density of batteries. However, during the charging and discharging processes of lithium batteries, silicon materials undergo a volume expansion of nearly 400%, resulting in low initial Coulombic efficiency of the lithium-ion batteries. Currently, an advanced vapor deposition method can be employed to mitigate the issue of silicon expansion.

Furthermore, compared to the volume expansion of silicon materials, cobalt dissolution and generation of organic byproducts at the positive electrode, which arise from lithium cobalt oxide at high voltages, have more severe impacts on silicon-carbon materials. Especially, in long-term calendar aging tests, silicon particles may fracture, thereby exposing the silicon-carbon material and further allowing direct contact with the electrolyte. Under these conditions, in addition to the inherent hard expansion of the silicon-carbon materials themselves, gas-induced swelling also occurs, ultimately compromising the safety performance of batteries.

Therefore, it is especially critical to enhance the storage and safety performance of batteries.

### SUMMARY OF THE DISCLOSURE

An objective of the present disclosure is to enhance the high-temperature storage stability and the safe performance of a secondary battery during charge-discharge cycling under a high voltage.

To achieve the above objective, in a first aspect of the present disclosure, a secondary battery is provided, including a positive electrode plate, an electrolyte, a separator, and a negative electrode plate; the positive electrode plate includes a positive electrode current collector and a positive electrode active material layer disposed on at least one surface of the positive electrode current collector; a positive electrode active material in the positive electrode active material layer includes an aluminum (Al) element; the electrolyte includes an organic solvent, a lithium salt, a nitrile-based additive, and a pyridine-based additive;
the secondary battery satisfies a relationship as follows:
   $0.3 \leq A / \left[100\times \left(N+100P\right)\right] \leq 25 ;$
where A, in ppm, represents a mass content of the Al element in the positive electrode active material;
P, in %, represents a mass percentage of the pyridine-based additive in the electrolyte;
N, in %, represents a mass percentage of the nitrile-based additive in the electrolyte.

As an embodiment of the present disclosure, the secondary battery satisfies: 2.5≤A/[100×(N+100P)]≤5.

As an embodiment of the present disclosure, the mass content A, in ppm, of the Al element in the positive electrode active material satisfies: 3000≤A≤16000.

As an embodiment of the present disclosure, the mass percentage N, in %, of the nitrile-based additive in the electrolyte satisfies: 0.1≤N≤4.5.

As an embodiment of the present disclosure, the mass percentage P, in %, of the pyridine-based additive in the electrolyte satisfies: 0.02≤P≤3.0.

As an embodiment of the present disclosure, the secondary battery satisfies: 0.3≤100×P/N≤55.

As an embodiment of the present disclosure, the positive electrode active material includes a layered lithium metal oxide, and the layered lithium metal oxide includes at least one selected from the group consisting of lithium cobalt oxide, lithium manganese oxide, lithium nickel oxide, and lithium nickel cobalt manganese oxide.

As an embodiment of the present disclosure, the nitrile-based additive has a structure represented by Formula I:

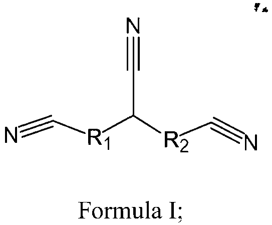

where in Formula I, R₁ and R₂ are each independently selected from a fluorine-substituted or unsubstituted, linear or branched C1 to C3 alkyl group.

As a preferred embodiment of the present disclosure, the nitrile-based additive includes at least one selected from compounds having structural formulas as follows:

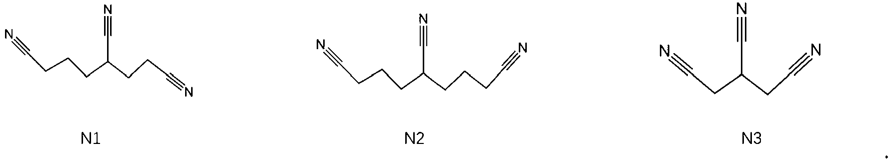

As an embodiment of the present disclosure, the pyridine-based additive has a structure represented by Formula II:

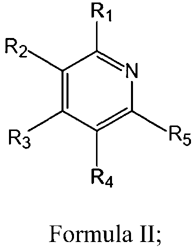

where in Formula II, R₁, R₂, R₃, R₄, and R₅ are each independently selected from H, halo, a halogenated or non-halogenated C1 to C2 alkyl, or a halogenated or non-halogenated C2 to C4 alkenyl.

As a preferred embodiment of the present disclosure, the pyridine-based additive includes at least one selected from compounds having structural formulas as follows:

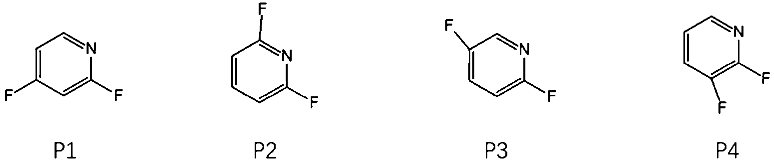

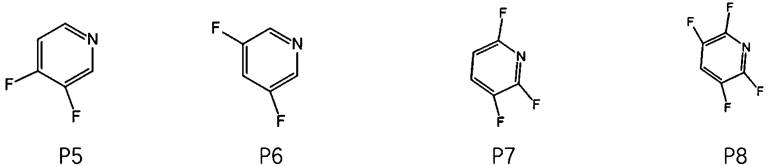

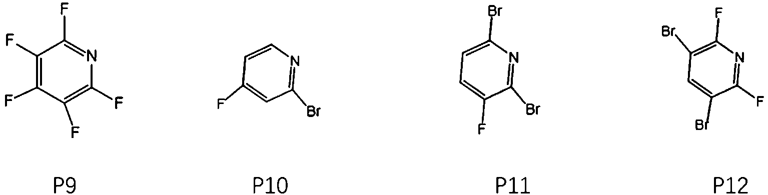

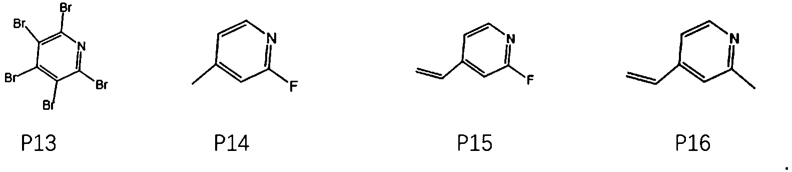

As an embodiment of the present disclosure, the organic solvent includes at least one selected from the group consisting of a carbonate solvent, a carboxylate solvent, and an ether solvent.

As an embodiment of the present disclosure, the lithium salt includes at least one selected from the group consisting of lithium hexafluorophosphate (LiPF₆), lithium difluorophosphate (LiPO₂F₂), lithium difluorobis(oxalato)phosphate (LiDFOP), lithium tetrafluoro(oxalato)phosphate (LiTFOP), lithium bis(oxalato)borate (LiBOB), lithium difluoro(oxalato)borate (LiDFOB), lithium tetrafluoroborate (LiBF₄), lithium bis(trifluoromethanesulfonyl)imide (LiTFSI), lithium bis(fluorosulfonyl)imide (LiFSI), and lithium 4,5-dicyano-2-(trifluoromethyl)imidazol-1-ide (LiTDI).

In a second aspect of the present disclosure, an electrical device is provided, including the secondary battery described in the first aspect of the present disclosure.

Compared with the prior art, the present disclosure brings the following beneficial effects:

The present disclosure effectively enhances the complexation between the nitrile-based and pyridine-based additives in the electrolyte and the positive electrode active material, by correlating and defining the relationship between the key additives in the electrolyte and the Al content in the positive electrode active material. Specifically, on the one hand, Al doping or coating can lower the energy of the O₂ₚ band center in the positive electrode active material, reduce the oxidative activity of oxygen at high voltages, stabilize the crystal structure, and mitigate the redox fluctuations of Co³⁺/Co⁴⁺, thereby providing a more uniform electronic environment for additive adsorption. On the other hand, a stable interface formed by Al doping or coating, such as more stable Co-Al-O interfacial sites exposed in lithium cobalt oxide (LCO) materials, enables the nitrile-based and pyridine-based additives to adsorb in a more ordered manner, which lowers the interfacial energy barrier. Therefore, by correlating and defining the relationship between the key additives in the electrolyte and the Al content in the positive electrode active material, the present disclosure can improve the film-forming stability of a battery during charging, thereby significantly enhancing the storage stability of the battery at a high temperature and a high voltage.

### DETAILED DESCRIPTION

To make the objectives, technical solutions, and advantages of the embodiments of the present disclosure clearer, the technical solutions in the embodiments of the present disclosure will be clearly and completely described below. Obviously, the described embodiments are merely a part of the embodiments of the present disclosure, not all of them. All other embodiments obtained by those skilled in the art, based on the embodiments of the present disclosure without creative efforts, shall fall within the protection scope of the present disclosure.

In the present disclosure, when a technical solution includes technical features described in an open-ended manner, the technical solution includes a close-ended technical solution composed of the listed features and an open-ended technical solution including the listed features.

In the present disclosure, unless otherwise specified, any numerical range is considered continuous, and includes minimum and maximum values of the numerical range as well as any value between the minimum and maximum values. Further, when the numerical range refers to integers, any integer between the minimum and maximum values of the numerical range is included. Additionally, when a plurality of ranges are provided to describe a feature or characteristic, the plurality of ranges can be combined. In other words, unless otherwise indicated, all ranges disclosed herein shall be understood to encompass any and all sub-ranges included therein.

Unless otherwise specified, reagents or instruments used in the present disclosure are conventional products that can be available commercially.

In a first aspect of the present disclosure, a secondary battery is provided, including a positive electrode plate, an electrolyte, a separator, and a negative electrode plate; where the positive electrode plate includes a positive electrode current collector and a positive electrode active material layer disposed on at least one surface of the positive electrode current collector; a positive electrode active material in the positive electrode active material layer includes an aluminum (Al) element; the electrolyte includes an organic solvent, a lithium salt, a nitrile-based additive, and a pyridine-based additive;
the secondary battery satisfies a relationship as follows:
   $0.3 \leq A / \left[100\times \left(N+100P\right)\right] \leq 25 ;$
where A, in ppm, represents a mass content of the Al element in the positive electrode active material;
P, in %, represents a mass percentage of the pyridine-based additive in the electrolyte;
N, in %, represents a mass percentage of the nitrile-based additive in the electrolyte.

Through extensive research, the present disclosure adjusts the strong correlation between the composition of the electrolyte (i.e., the mass percentages of the pyridine-based additive and the nitrile-based additive) and the Al content in the positive electrode active material in a secondary battery, ensuring that these parameters satisfy the above-mentioned relationship. This effectively enhances the complexation between the nitrile-based and pyridine-based additives in the electrolyte and the positive electrode active material, and improves the film-forming stability of the secondary battery during charging, thereby significantly improving the storage stability of the secondary battery at a high temperature and a high voltage.

In some embodiments, a calculated value of A/[100×(N+100P)] may be any one selected from the group consisting of 0.42, 1.44, 1.78, 6.15, 8.82, 10.48, 13.49, and 21.43, or a range defined by any two of these values. More preferably, the secondary battery satisfies: 2.5≤A/[100×(N+100P)]≤5.

In some embodiments, the mass content A, in ppm, of the Al element in the positive electrode active material satisfies: 3000≤A≤16000. Specifically, the mass content of the Al element in the positive electrode active material may be any one selected from the group consisting of 3,000 ppm, 4,800 ppm, 10,000 ppm, 12,000 ppm, and 16,000 ppm, or a range defined by any two of these values. More preferably, the mass content of the Al element in the positive electrode active material is in a range of from 5,000 ppm to 10,000 ppm. In the present disclosure, the Al element in the positive electrode active material may exist in any form, without any limitation. The Al element may be either doped or coated. Doping the Al element into the crystal lattice of the positive electrode active material can stabilize the structure of the positive electrode active material, expand the ion channels, and thus enhance the ionic conductivity of the positive electrode active material. Coating a surface of the positive electrode active material with an Al-containing compound, such as AlF₃ or Al₂O₃, can reduce the occurrence of side reactions, suppress the dissolution of transition metal ions in the electrolyte, and simultaneously mitigate the structural collapse of the positive electrode active material.

In some embodiments, the mass percentage N, in %, of the nitrile-based additive in the electrolyte satisfies: 0.1≤N≤4.5, preferably 2.0≤N≤3.5. The nitrile-based additive can suppress the reaction between the positive electrode active material and the non-aqueous electrolyte during high-temperature storage after charging, thereby reducing gas generation and deterioration of battery characteristics. An addition amount of the nitrile-based additive may be any one selected from the group consisting of 0.1%, 1.42%, 2%, 3%, 3.5%, and 4.5%, or a range defined by any two of these values.

In some embodiments, the mass percentage P, in %, of the pyridine-based additive in the electrolyte satisfies: 0.02≤P≤3.0, preferably 0.08≤P≤0.8. P represents a mass content of the pyridine-based additive in the electrolyte. The pyridine-based additive can simultaneously form a stable and low-impedance solid electrolyte interphase (SEI) film on both the positive and negative electrode interfaces, thereby improving the stability of the positive and negative electrode interfaces. This further reduces the damage to the SEI film on the negative electrode caused by the dissolution of transition metal ions, mitigates the oxidative decomposition of the electrolyte by ions from the positive electrode active material and the resulting heat generation, and also lowers the Joule heat of the secondary battery, thereby improving the high-temperature storage performance, cycling performance and safety performance of the secondary battery. An addition amount of the pyridine-based additive may be any one selected from the group consisting of 0.02%, 0.05%, 0.08%, 0.8%, 1.7%, 2.5%, and 2.7%, or a range defined by any two of these values.

In some embodiments, the secondary battery satisfies: 0.3≤100×P/N≤55. Satisfying this relationship can further enable the above-mentioned key additives to more effectively induce film formation and achieve the complexation and protection in the positive electrode material, minimizing gas generation during storage in a silicon-carbon system while improving the impact resistance of the secondary battery. A calculated value of 100×P/N may be any one selected from the group consisting of 0.80, 2.50, 6.25, 9.38, 15.00, 22.22, 45.95, 48.15, and 55, or a range defined by any two of these values. More preferably, the secondary battery satisfies: 4.5≤100×P/N≤12.

In the present disclosure, the positive electrode active material includes at least one selected from the group consisting of LiNiₐCo_{b}Mn_{c}M_{1-a-b-c}O₂, LiFe_{1-L}M'_{L} PO₄, and LiMn_{2-K}X_{K}O₄, where M is at least one selected from the group consisting of Y, Ti, Na, Fe, Co, Ni, Mn, Mg, Cu, Zn, Al, Sn, B, Ga, Cr, Sr, and V, M' is at least one selected from the group consisting of Mn, Mg, Co, Ni, Cu, Zn, Al, Sn, B, Ga, Cr, Sr, V, and Ti, 0≤a≤1, 0≤b≤1, 0≤c≤ 1, a+b+c≤1, 0≤L<1, and 0≤K≤1. Therefore, in some embodiments, the positive electrode active material is preferably at least one selected from the group consisting of LiNiO₂, LiCoO₂, LiMnO₂, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.5}Co_{0.2}Al_{0.3}O₂, LiFePO₄, LiFe_{0.7}Mn_{0.3}PO₄, LiFe_{0.6}Mn_{0.4}PO₄, and LiMn₂O₄.

In some embodiments, the positive electrode active material layer also includes a conductive agent and a binder. Types of the conductive agent and the binder are not particularly limited, and any conductive agent and any binder commonly used in a secondary battery in the field can be employed in the present disclosure. The conductive agent includes, but is not limited to, at least one selected from the group consisting of conductive carbon black, graphite, a carbon fiber, a carbon nanotube, graphene, and acetylene black. The binder includes, but is not limited to, at least one selected from the group consisting of polyvinylidene fluoride (PVDF), polytetrafluoroethylene (PTFE), polyacrylic acid (PAA), styrene-butadiene rubber (SBR) latex, and polyimide (PI).

In some embodiments, the nitrile-based additive has a structure represented by Formula I: 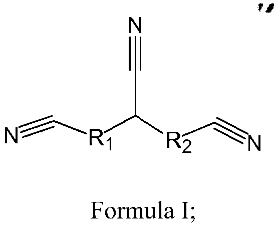 where in Formula I, R₁ and R₂ are each independently selected from a fluorine-substituted or unsubstituted, linear or branched C1 to C3 alkyl group.

In some embodiments, the nitrile-based additive is at least one selected from compounds having structural formulas as follows:

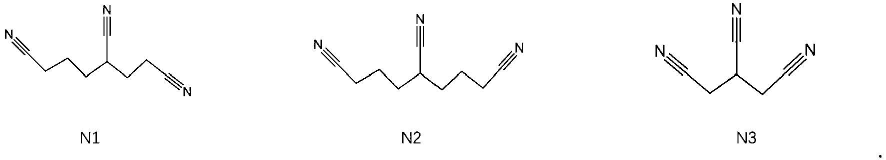

In some embodiments, the pyridine-based additive has a structure represented by Formula II:

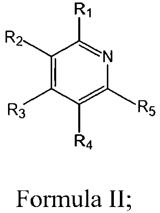

where in Formula II, R₁, R₂, R₃, R₄, and R₅ are each independently selected from H, halo, a halogenated or non-halogenated C1 to C2 alkyl, or a halogenated or non-halogenated C2 to C4 alkenyl.

In some embodiments, the pyridine-based additive is at least one selected from compounds having structural formulas as follows:

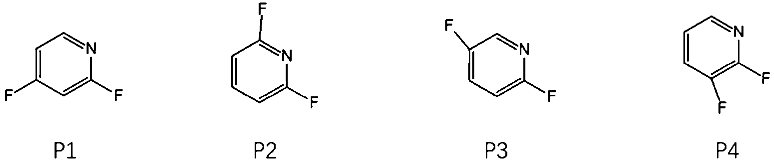

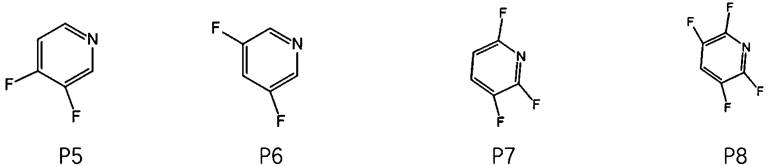

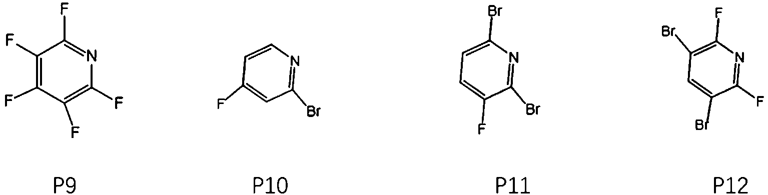

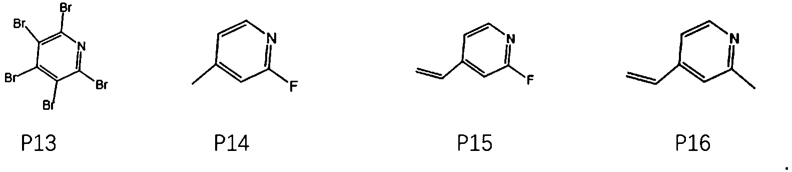

In some embodiments, the organic solvent includes at least one selected from the group consisting of a carbonate solvent, a carboxylate solvent, and an ether solvent. The carbonate solvent includes at least one selected from the group consisting of ethylene carbonate, fluoroethylene carbonate, 4,4-difluoroethylene carbonate, 4,5-difluoroethylene carbonate, vinylene carbonate, fluorovinylene carbonate, dimethyl carbonate, fluorodimethyl carbonate, ethyl methyl carbonate, fluoroethyl methyl carbonate, diethyl carbonate, fluorodiethyl carbonate, dibutyl carbonate, fluorodibutyl carbonate, diphenyl carbonate, and fluorodiphenyl carbonate. The carboxylate solvent includes a fluorinated or non-fluorinated carboxylate, where the non-fluorinated carboxylate includes at least one selected from the group consisting of methyl formate, ethyl formate, propyl formate, butyl formate, methyl acetate, ethyl acetate, propyl acetate, butyl acetate, methyl propionate, ethyl propionate, propyl propionate, butyl propionate, methyl n-butyrate, methyl isobutyrate, ethyl n-butyrate, ethyl isobutyrate, propyl n-butyrate, propyl isobutyrate, butyl n-butyrate, and butyl isobutyrate. The fluorinated carboxylate is at least one selected from fluorinated organic compounds derived from the non-fluorinated carboxylates listed above. The ether solvent includes at least one selected from the group consisting of ethylene glycol dimethyl ether, 1,3-dioxolane, and 1,1,2,2-tetrafluoroethyl-2,2,3,3-tetrafluoropropyl ether.

In some embodiments, the lithium salt includes at least one selected from the group consisting of lithium hexafluorophosphate (LiPF₆), lithium difluorophosphate (LiPO₂F₂), lithium difluorobis(oxalato)phosphate (LiDFOP), lithium tetrafluoro(oxalato)phosphate (LiTFOP), lithium bis(oxalato)borate (LiBOB), lithium difluoro(oxalato)borate (LiDFOB), lithium tetrafluoroborate (LiBF₄), lithium bis(trifluoromethanesulfonyl)imide (LiTFSI), lithium bis(fluorosulfonyl)imide (LiFSI), and lithium 4,5-dicyano-2-(trifluoromethyl)imidazol-1-ide (LiTDI).

In some embodiments, the negative electrode plate includes a negative electrode current collector and a negative electrode active material layer disposed on at least one surface of the negative electrode current collector, the negative electrode active material layer includes a negative active material. In the present disclosure, a type of the negative electrode active material is not limited, and any negative electrode active material commonly used in the field can be used for preparing the secondary battery of the present disclosure. The negative electrode active material includes, but is not limited to, at least one selected from the group consisting of a silicon oxide material, a carbon material, and a silicon/carbon composite material.

In the present disclosure, types of the positive electrode current collector, the negative electrode current collector and the separator are not limited and can be selected as needed. Common current collector materials and separators in the field can be used in the present disclosure.

In some embodiments, the negative electrode current collector may preferably be a copper foil or a carbon-coated copper foil;
the positive electrode current collector may be made of (1) a metallic material, such as aluminum, stainless steel, nickel plating, titanium, and tantalum; (2) a carbon material, such as carbon cloth and carbon paper; or (3) a composite material formed from a polymer and a metal layer. In some embodiments, the positive electrode current collector may preferably be an aluminum foil.

In some embodiments, a type of a solvent used for preparing a positive electrode slurry and/or a negative electrode slurry is not limited, as long as the solvent is capable of dissolving or dispersing a positive electrode active material, a negative electrode active material, a conductive agent, a binder, and a dispersant.

In the secondary battery described in the present disclosure, a type of the separator is not particularly limited, and can be selected according to actual needs. The separator may be a polypropylene film, a polyethylene film, a polyvinylidene fluoride film, a spandex film, an aramid film, or a multilayer composite film modified by coating.

In some embodiments, a preparation method of the secondary battery includes steps of: stacking the positive electrode plate, the separator, and the negative electrode plate in order, with the separator positioned between the positive and negative electrode plates to provide isolation; winding the positive electrode plate, the separator and the negative electrode plate that are stacked in order into a prismatic bare cell, followed by placing the prismatic bare cell into a battery casing; baking at 65-95 °C to remove moisture, injecting the electrolyte, and sealing; and performing processes such as standing, hot and cold pressing, formation, fixture holding, and grading, to obtain the secondary battery.

In some embodiments, the secondary battery may include an outer casing. The outer casing may be a hard casing, such as a hard plastic casing, an aluminum casing, or a steel casing. Alternatively, the outer casing of the secondary battery may be a soft casing, such as a pouch-type soft casing. A material of the soft casing may be plastic, such as one or more selected from the group consisting of polypropylene, polyethylene terephthalate, and polybutylene succinate; or, the material of the soft case may be an aluminum-plastic film, such as an aluminum-plastic composite film composed of a polyamide (PA) layer, an aluminium (Al) layer and a polypropylene (PP) layer (i.e., PA layer/Al layer/PP layer composite film). A shape of the secondary battery is not particularly limited, and it may be cylindrical, prismatic, or any other shape.

In a second aspect of the present disclosure, an electrical device is provided, including the secondary battery described in the first aspect of the present disclosure. The electrical device may be an application device, such as a vehicle, a mobile phone, a portable device, a laptop computer, a ship, a spacecraft, an electric toy, and an electric tool. The vehicle may be a new energy vehicle, which may be a battery electric vehicle, a hybrid electric vehicle, or an extended-range electric vehicle; the spacecraft includes an airplane, a rocket, a space shuttle, and a spaceship; the electric toy includes a stationary or mobile electric toy, such as a game console, an electric car toy, an electric boat toy, and an electric airplane toy; and the electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer. In the embodiments of the present disclosure, there is no special limitation on the above devices.

The following are some specific examples of the present disclosure, and the technical solutions of the present disclosure are further described in conjunction with these examples. However, the present disclosure is not limited to these examples. Unless otherwise specified, reagents, methods, and equipment used in the present disclosure are conventional reagents, methods, and equipment in the field.

### Example 1

In the present disclosure, a secondary battery was provided, and it was prepared through a preparation process as follows:

### Preparation of a Positive Electrode Plate

An aluminum-containing compound, Al(NO₃)₃·9H₂O, was dissolved in anhydrous ethanol to obtain an aluminum-containing solution. The aluminum-containing solution and lithium cobalt oxide were uniformly mixed and then calcined at 300 °C for 4 hours, followed by calcination in an atmosphere of O₂ at 750 °C for 6 hours, yielding an aluminum-doped lithium cobalt oxide as a positive electrode active material. A doping amount of an Al element in the positive electrode active material was detailed in Table 2. Then, the positive electrode active material, acetylene black as a conductive agent, and polyvinylidene fluoride (PVDF) as a binder were uniformly mixed in a mass ratio of 98.5:0.5:1 to obtain a mixed material, which was then uniformly dispersed in 1-methyl-2-pyrrolidone (NMP) to form a uniform black slurry. The prepared black slurry was coated on both sides of an aluminum foil, followed by baking, rolling, and cutting to obtain the positive electrode plate with a compaction density of 0.33 g/cm³. Other relevant parameters of related raw materials in the positive electrode plate were detailed in Table 2.

Test Method for Mass Content of Aluminum in the Positive Electrode Active Material: At least one positive electrode plate sample was collected from each of the left, middle, and right sections of the positive electrode plate to obtain no less than three positive electrode plate samples. These positive electrode plate samples each had an area of at least 2.5 cm×2.5 cm, and were intact, without powder shedding. The positive electrode plate samples were each gently scraped with a scraper to obtain a positive electrode active material powder sample to be tested, with a total mass of 2 g or more for testing. The positive electrode active material powder sample to be tested was dissolved in aqua regia (a mixture of concentrated hydrochloric acid and concentrated nitric acid in a volume ratio of 3:1), and an elemental analysis was performed using inductively coupled plasma (ICP). Under this condition, a mass content of the Al element in the positive electrode active material was measured and defined as Parameter "A".

### Preparation of a Negative Electrode Plate

SiC as a negative electrode active material, a carbon nanotube as a conductive agent, carboxymethyl cellulose (CMC) as a thickening agent and polyacrylic acid (PAA) as a binder were mixed in a mass ratio of 97:0.8:1.2:1. Deionized water was added as a solvent, and a resulting mixture was stirred in a mixer until the mixture was uniform, thereby yielding a negative electrode slurry. The negative electrode slurry was uniformly coated onto a copper foil as a negative electrode current collector. Then, a coated copper foil was dried in an oven, rolled, and cut to obtain the negative electrode plate (a compaction density of the negative electrode plate was 1.60 g/cm³).

### Preparation of an Electrolyte

At room temperature, in an argon-filled glove box (H₂O<1 ppm, O₂<1 ppm), ethylene carbonate (EC), ethyl methyl carbonate (EMC) and diethyl carbonate (DEC) were mixed in a volume ratio of 1:1:1. A resulting mixture was dehydrated using a 4Å molecular sieve to obtain a mixed organic solvent. An electrolyte salt, i.e., lithium salt (lithium hexafluorophosphate) was slowly added to the mixed organic solvent under continuous stirring, while dry ice was used for cooling to ensure that a temperature increase of the electrolyte did not exceed 2 °C. A colorless transparent liquid was then obtained. Subsequently, a nitrile-based additive and a pyridine-based additive were added and thoroughly mixed to obtain the electrolyte. Detailed composition of the electrolyte was shown in Table 1.

The nitrile-based additive was 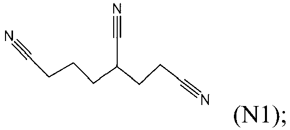 the pyridine-based additive was

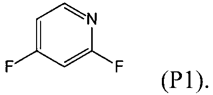

**Table 1 Electrolyte Composition (mass percentages)**

| | |
|---|---|
| Nitrile-based additive (mass percentage, denoted as N, in %) | 1.8% |
| Pyridine-based additive (mass percentage, denoted as P, in %) | 0.06% |
| Lithium salt (mass percentage, denoted as D, in %) | 14% |
| Organic solvent | to 100% |

### Assembly of a Secondary Battery

The prepared positive electrode plate, a polypropylene separator and the negative electrode plate were stacked in order, with the separator positioned between the positive and negative electrode plates, and then wound into a cell and placed in a soft casing. After undergoing top and side sealing, electrolyte injection, formation, grading and other processes, a lithium-ion secondary battery was obtained.

### Examples 2-42 and Comparative Examples 1-8

A series of secondary batteries were provided and prepared according to the method of Example 1, with the differences from Example 1 summarized in Table 2. By adjusting the selection and addition amounts of certain raw materials in the electrolyte, as well as the aluminum content in the positive electrode active material, a series of secondary batteries were obtained, as shown in Table 2.

**Table 2**

| Item | Nitrile-based additive | | Pyridine-based additive | | Al content in the positive electrode active material, ppm | 100×P/N | A/[100×(N+100P)] |
|---|---|---|---|---|---|---|---|
| | Content N, in % | Structural formula | Content P, in % | Structural formula | | | |
| Example 1 | 1.8 | N1 | 0.06 | P1 | 4800 | 3.33 | 6.15 |
| Example 2 | 3.6 | N1 | 1.1 | P1 | 4800 | 30.56 | 0.42 |
| Example 3 | 0.80 | N1 | 0.05 | P1 | 12000 | 6.25 | 20.69 |
| Example 4 | 3.60 | N1 | 0.05 | P1 | 4500 | 1.39 | 5.23 |
| Example 5 | 2.50 | N1 | 0.02 | P1 | 3000 | 0.80 | 6.67 |
| Example 6 | 3.00 | N1 | 0.04 | P1 | 4500 | 1.33 | 6.43 |
| Example 7 | 3.60 | N1 | 0.10 | P1 | 12000 | 2.78 | 8.82 |
| Example 8 | 3.60 | N1 | 0.80 | P1 | 12000 | 22.22 | 1.44 |
| Example 9 | 0.80 | N1 | 0.02 | P1 | 6000 | 2.50 | 21.43 |
| Example 10 | 3.70 | N1 | 1.70 | P1 | 8000 | 45.95 | 0.46 |
| Example 11 | 2.00 | N1 | 0.30 | P1 | 4800 | 15.00 | 1.50 |
| Example 12 | 2.50 | N1 | 0.08 | P1 | 11000 | 3.20 | 10.48 |
| Example 13 | 3.00 | N1 | 0.70 | P1 | 13000 | 23.33 | 1.78 |
| Example 14 | 2.30 | N1 | 1.10 | P1 | 7000 | 47.83 | 0.62 |
| Example 15 | 2.70 | N1 | 1.30 | P1 | 5500 | 48.15 | 0.41 |
| Example 16 | 3.30 | N1 | 0.03 | P1 | 8500 | 0.91 | 13.49 |
| Example 17 | 1.42 | N1 | 0.10 | P1 | 9000 | 7.04 | 7.88 |
| Example 18 | 3.70 | N1 | 0.08 | P1 | 7500 | 2.16 | 6.41 |
| Example 19 | 3.70 | N1 | 0.60 | P1 | 9900 | 16.22 | 1.55 |
| Example 20 | 2.50 | N1 | 0.08 | P1 | 6600 | 3.20 | 6.29 |
| Example 21 | 3.00 | N1 | 0.10 | P1 | 8350 | 3.33 | 6.42 |
| Example 22 | 3.50 | N1 | 0.12 | P1 | 10000 | 3.43 | 6.45 |
| Example 23 | 3.20 | N1 | 0.30 | P1 | 10000 | 9.38 | 3.01 |
| Example 24 | 3.00 | N1 | 0.20 | P1 | 8500 | 6.67 | 3.70 |
| Example 25 | 2.30 | N1 | 0.17 | P1 | 9100 | 7.39 | 4.72 |
| Example 26 | 2.70 | N1 | 0.25 | P1 | 9300 | 9.26 | 3.36 |
| Example 27 | 3.10 | N1 | 0.20 | P1 | 8800 | 6.45 | 3.81 |
| Example 28 | 2.90 | N1 | 0.17 | P1 | 9100 | 5.86 | 4.57 |
| Example 29 | 2.90 | N2 | 0.17 | P1 | 9100 | 5.86 | 4.57 |
| Example 30 | 2.90 | N3 | 0.17 | P1 | 9100 | 5.86 | 4.57 |
| Example 31 | 2.90 | N1 | 0.17 | P2 | 9100 | 5.86 | 4.57 |
| Example 32 | 2.90 | N1 | 0.17 | P3 | 9100 | 5.86 | 4.57 |
| Example 33 | 2.90 | N1 | 0.17 | P4 | 9100 | 5.86 | 4.57 |
| Example 34 | 2.90 | N1 | 0.17 | P5 | 9100 | 5.86 | 4.57 |
| Example 35 | 2.90 | N1 | 0.17 | P6 | 9100 | 5.86 | 4.57 |
| Example 36 | 2.90 | N1 | 0.17 | P7 | 9100 | 5.86 | 4.57 |
| Example 37 | 2.90 | N1 | 0.17 | P8 | 9100 | 5.86 | 4.57 |
| Example 38 | 2.90 | N1 | 0.17 | P9 | 9100 | 5.86 | 4.57 |
| Example 39 | 4.5 | N1 | 2.7 | P1 | 16000 | 60.00 | 0.58 |
| Example 40 | 0.1 | N1 | 0.23 | P1 | 4000 | 230.00 | 1.73 |
| Example 41 | 3.7 | N1 | 2.6 | P1 | 11000 | 70.27 | 0.42 |
| Example 42 | 1.3 | N1 | 1.5 | P1 | 16000 | 115.38 | 1.06 |
| Comparative Example 1 | 0.1 | N1 | 0 | P1 | 0 | 0 | 0 |
| Comparative Example 2 | 4.1 | N1 | 2 | P1 | 1000 | 48.78 | 0.05 |
| Comparative Example 3 | 4.5 | N1 | 0 | P1 | 20000 | 0.00 | 44.44 |
| Comparative Example 4 | 5 | N1 | 2.6 | P1 | 2500 | 52.00 | 0.09 |
| Comparative Example 5 | 0.16 | N1 | 0.05 | P1 | 15000 | 31.25 | 29.07 |
| Comparative Example 6 | 3.52 | N1 | 0.012 | P1 | 15000 | 0.34 | 31.78 |
| Comparative Example 7 | 3.52 | N1 | 0.13 | P1 | 100 | 3.69 | 0.06 |
| Comparative Example 8 | 3.55 | N1 | 1.3 | P1 | 3000 | 36.62 | 0.22 |

Performance of the secondary batteries obtained in Examples 1-42 and Comparative Examples 1-8 were tested. Detailed test items, test methods, and results were as follows:

### (1) High-temperature storage stability after storage at 85°C for 6 hours:

A secondary battery was placed at room temperature (25 ± 2 °C) and charged to 4.55V at 0.5 C, followed by a constant voltage charge until the current decreased to a cutoff rate of 0.02 C. After standing for 30 minutes, the secondary battery was then discharged to 3.0 V at 0.5 C, and a discharge capacity before storage was recorded and denoted as C₀. Then, the secondary battery was charged to 4.55V (fully charged state, 100% SOC (State of Charge)) at a rate of 0.5 C using a constant current-constant voltage charging mode, until the current decreased to a cutoff rate of 0.02 C. The battery was then placed in an oven at a constant temperature of 85 °C and stored for 6 hours. After storage, the battery was taken out and cooled at room temperature for 24 hours. The battery was then discharged to 3.0 V again at a rate of 0.5 C using a constant current discharging mode, and then charged to 4.55 V at a rate of 0.5 C using a constant current-constant voltage charging mode. A discharge capacity after storage for 6 hours was recorded and denoted as C₁. A capacity retention rate after storage at 85°C for 6 hours was calculated using the following formula:

Capacity retention rate after storage at 85 °C for 6 hours = C₁/C₀ × 100%.

### (2) Thermal shock test:

Under an ambient condition at 25 °C, a secondary battery was discharged to 3.0V at a given current rate of 0.2 C. After standing for 5 minutes, the secondary battery was charged to 4.55V at a charging current of 0.2 C. When a battery voltage reached 4.55V, the secondary battery was charged at a constant voltage of 4.55V until the charging current dropped to a cutoff current of 0.05 C or less. After standing for 1 hour, the secondary battery was placed in an oven. A temperature of the oven was increased to 135 °C at a rate of 5±2 °C/min, and then held at that temperature for 60 minutes. After that, the test was completed. A judgment criterion was as follows: the battery passed if it did not catch fire or explode. Similarly, the thermal shock test at 136 °C followed the same procedures as described above.

Test results were shown in Table 3.

**Table 3**

| Item | Capacity retention rate after storage at 85 °C for 6 hours | Pass rate for the thermal shock test at 135 °C | Pass rate for the thermal shock test at 136 °C |
|---|---|---|---|
| Example 1 | 91.1% | 8/10pass | 4/10pass |
| Example 2 | 84.3% | 7/10pass | 3/10pass |
| Example 3 | 83.2% | 6/10pass | 3/10pass |
| Example 4 | 92.0% | 8/10pass | 4/10pass |
| Example 5 | 85.3% | 6/10pass | 3/10pass |
| Example 6 | 86.3% | 7/10pass | 3/10pass |
| Example 7 | 85.3% | 6/10pass | 3/10pass |
| Example 8 | 87.2% | 6/10pass | 3/10pass |
| Example 9 | 83.1% | 6/10pass | 3/10pass |
| Example 10 | 85.4% | 6/10pass | 3/10pass |
| Example 11 | 87.2% | 6/10pass | 3/10pass |
| Example 12 | 84.7% | 6/10pass | 3/10pass |
| Example 13 | 89.5% | 8/10pass | 4/10pass |
| Example 14 | 85.8% | 6/10pass | 3/10pass |
| Example 15 | 84.2% | 7/10pass | 3/10pass |
| Example 16 | 84.3% | 6/10pass | 3/10pass |
| Example 17 | 85.4% | 6/10pass | 3/10pass |
| Example 18 | 89.0% | 8/10pass | 4/10pass |
| Example 19 | 88.0% | 7/10pass | 3/10pass |
| Example 20 | 91.1% | 8/10pass | 4/10pass |
| Example 21 | 86.3% | 7/10pass | 3/10pass |
| Example 22 | 86.0% | 8/10pass | 4/10pass |
| Example 23 | 92.1% | 8/10pass | 4/10pass |
| Example 24 | 92.0% | 8/10pass | 4/10pass |
| Example 25 | 92.2% | 8/10pass | 4/10pass |
| Example 26 | 91.9% | 8/10pass | 5/10pass |
| Example 27 | 92.5% | 9/10pass | 5/10pass |
| Example 28 | 93.5% | 9/10pass | 5/10pass |
| Example 29 | 92.3% | 8/10pass | 5/10pass |
| Example 30 | 92.0% | 8/10pass | 5/10pass |
| Example 31 | 93.0% | 9/10pass | 5/10pass |
| Example 32 | 92.3% | 9/10pass | 5/10pass |
| Example 33 | 92.1% | 9/10pass | 5/10pass |
| Example 34 | 92.0% | 9/10pass | 5/10pass |
| Example 35 | 92.7% | 9/10pass | 5/10pass |
| Example 36 | 93.1% | 9/10pass | 5/10pass |
| Example 37 | 93.1% | 9/10pass | 5/10pass |
| Example 38 | 93.4% | 9/10pass | 5/10pass |
| Example 39 | 85.6% | 5/10pass | 2/10pass |
| Example 40 | 89.2% | 5/10pass | 2/10pass |
| Example 41 | 84.6% | 5/10pass | 2/10pass |
| Example 42 | 85.6% | 5/10pass | 2/10pass |
| Comparative Example 1 | 65.50% | 0/10pass | 0/10pass |
| Comparative Example 2 | 74.3% | 1/10pass | 0/10pass |
| Comparative Example 3 | 78.0% | 0/10pass | 0/10pass |
| Comparative Example 4 | 77.6% | 1/10pass | 0/10pass |
| Comparative Example 5 | 79.7% | 3/10pass | 1/10pass |
| Comparative Example 6 | 80.1% | 3/10pass | 1/10pass |
| Comparative Example 7 | 74.5% | 3/10pass | 1/10pass |
| Comparative Example 8 | 78.9% | 4/10pass | 1/10pass |

From the aforementioned results, it can be seen that:
By correlating and defining the relationship between key additives in the electrolyte and the Al content in the positive electrode active material, the present disclosure can effectively enhance the complexation between the nitrile-based and pyridine-based additives in the electrolyte and the positive electrode active material, thereby improving the film-forming stability of the secondary batteries during charging, and thus significantly enhancing the storage stability and safety performance of the secondary batteries at a high temperature and a high voltage.

Finally, it should be noted that the above embodiments are only intended to illustrate the technical solution of the present disclosure, rather than to limit the protection scope of the present disclosure. Although the present disclosure has been described in detail with reference to preferred embodiments, those skilled in the art should understand that modifications or equivalent substitutions can be made to the technical solution of the present disclosure, without departing from the spirit and scope of the technical solution of the present disclosure.

## Claims

1. A secondary battery, comprising a positive electrode plate, an electrolyte, a separator and a negative electrode plate; wherein the positive electrode plate comprises a positive electrode current collector and a positive electrode active material layer disposed on at least one surface of the positive electrode current collector; a positive electrode active material in the positive electrode active material layer comprises an aluminum (Al) element; the electrolyte comprises an organic solvent, a lithium salt, a nitrile-based additive, and a pyridine-based additive;
the secondary battery satisfies a relationship as follows: $0.3 \leq A / \left[100\times \left(N+100P\right)\right] \leq 25 ;$
wherein, A, in ppm, represents a mass content of the Al element in the positive electrode active material;
P, in %, represents a mass percentage of the pyridine-based additive in the electrolyte;
N, in %, represents a mass percentage of the nitrile-based additive in the electrolyte.

2. The secondary battery according to claim 1, wherein the secondary battery satisfies: 2.5≤A/[100×(N+100P)]≤5.

3. The secondary battery according to claim 1, wherein the mass content A, in ppm, of the Al element in the positive electrode active material satisfies: 3000≤ A≤16000.

4. The secondary battery according to claim 1, wherein the mass percentage N, in %, of the nitrile-based additive in the electrolyte satisfies: 0.1≤N≤4.5.

5. The secondary battery according to claim 1, wherein the mass percentage P, in %, of the pyridine-based additive in the electrolyte satisfies: 0.02≤P≤3.0.

6. The secondary battery according to claim 1, wherein the secondary battery satisfies: 0.3≤100×P/N≤55.

7. The secondary battery according to claim 1, wherein the secondary battery satisfies at least one selected from the group consisting of (1) to (3):
(1) the positive electrode active material comprises a layered lithium metal oxide, and the layered lithium metal oxide comprises at least one selected from the group consisting of lithium cobalt oxide, lithium manganese oxide, lithium nickel oxide, and lithium nickel cobalt manganese oxide;
(2) the nitrile-based additive has a structure represented by Formula I: 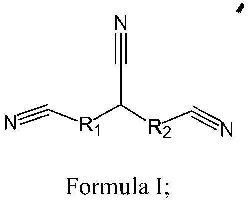 wherein in Formula I, R₁ and R₂ are each independently selected from a fluorine-substituted or unsubstituted, linear or branched C1 to C3 alkyl group;
(3) the pyridine-based additive has a structure represented by Formula II: 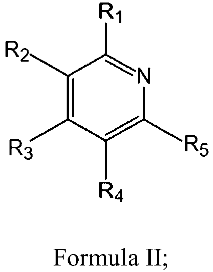 wherein in Formula II, R₁, R₂, R₃, R₄, and R₅ are each independently selected from H, halo, a halogenated or non-halogenated C1 to C2 alkyl, or a halogenated or non-halogenated C2 to C4 alkenyl.

8. The secondary battery according to claim 7, wherein the secondary battery satisfies at least one selected from the group consisting of (4) and (5):
(4) the nitrile-based additive comprises at least one selected from compounds having structural formulas as follows: 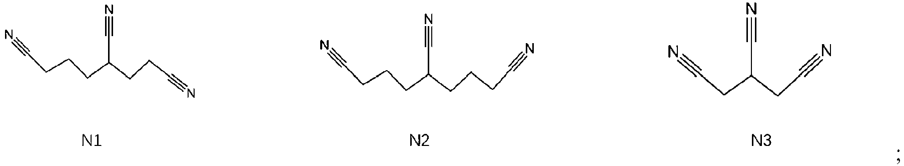
(5) the pyridine-based additive comprises at least one selected from compounds having structural formulas as follows:

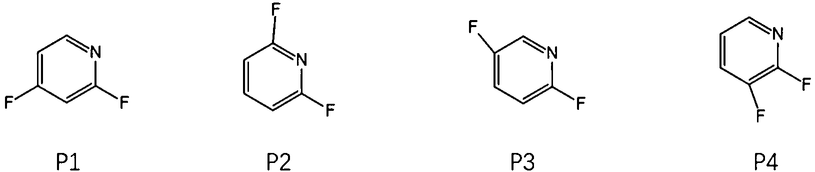

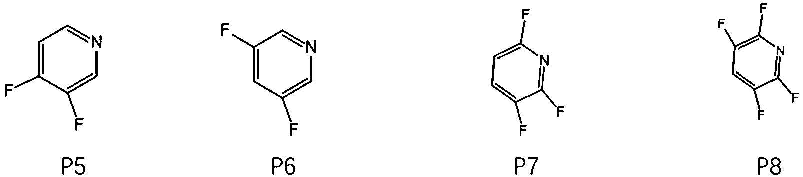

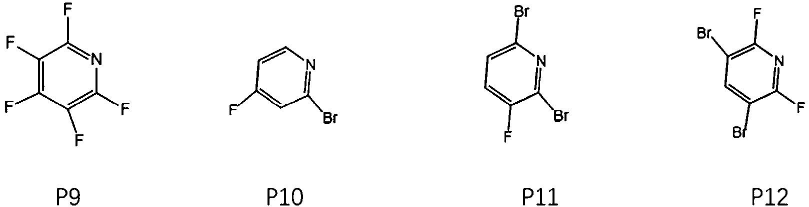

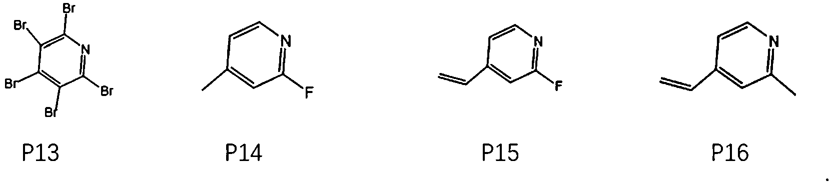

9. The secondary battery according to claim 1, wherein the secondary battery satisfies at least one selected from the group consisting of (6) and (7):
(6) the organic solvent comprises at least one selected from the group consisting of a carbonate solvent, a carboxylate solvent, and an ether solvent;
(7) the lithium salt comprises at least one selected from the group consisting of lithium hexafluorophosphate (LiPF₆), lithium difluorophosphate (LiPO₂F₂), lithium difluorobis(oxalato)phosphate (LiDFOP), lithium tetrafluoro(oxalato)phosphate (LiTFOP), lithium bis(oxalato)borate (LiBOB), lithium difluoro(oxalato)borate (LiDFOB), lithium tetrafluoroborate (LiBF₄), lithium bis(trifluoromethanesulfonyl)imide (LiTFSI), lithium bis(fluorosulfonyl)imide (LiFSI), and lithium 4,5-dicyano-2-(trifluoromethyl)imidazol-1-ide (LiTDI).

10. The secondary battery according to claim 1, wherein the secondary battery satisfies at least one selected from the group consisting of (a) and (l):
(a) the secondary battery satisfies: 2.5≤A/[100×(N+100P)]≤5;
(b) the mass content A, in ppm, of the Al element in the positive electrode active material satisfies: 3000≤A≤16000;
(c) the mass percentage N, in %, of the nitrile-based additive in the electrolyte satisfies: 0.1≤ N≤4.5
(d) the mass percentage P, in %, of the pyridine-based additive in the electrolyte satisfies: 0.02≤P≤3.0;
(e) $0.3 \leq 100 \times P / N \leq 55 ;$
(f) the positive electrode active material comprises a layered lithium metal oxide, which comprises at least one selected from the group consisting of lithium cobalt oxide, lithium manganese oxide, lithium nickel oxide, and lithium nickel cobalt manganese oxide;
(g) the nitrile-based additive has a structure represented by in Formula I: 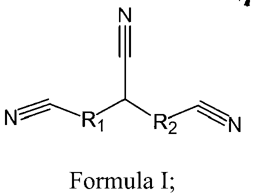 wherein in Formula I, R₁ and R₂ are each independently selected from a fluorine-substituted or unsubstituted linear or branched C1 to C3 alkyl group;
(h) the pyridine-based additive has a structure represented by Formula II: 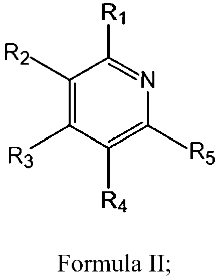 wherein in Formula II, R₁, R₂, R₃, R₄, and R₅ are each independently selected from H, halo, a halogenated or non-halogenated C1 to C2 alkyl, or a halogenated or non-halogenated C2 to C4 alkenyl;
(i) the nitrile-based additive comprises at least one selected from compounds having structural formulas as follows: 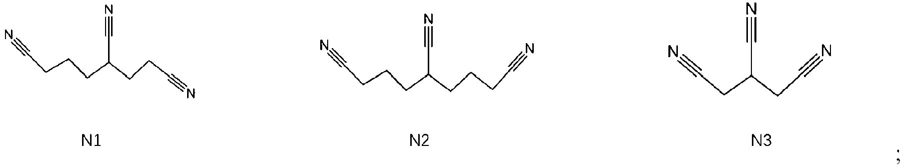
(j) the pyridine-based additive comprises at least one selected from compounds having structural formulas as follows: 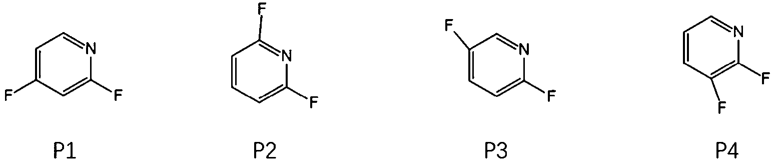 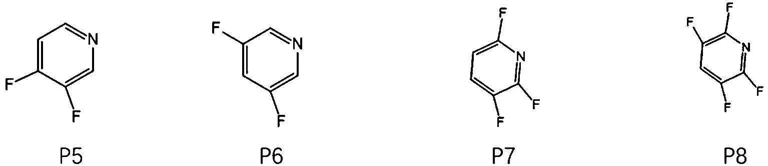 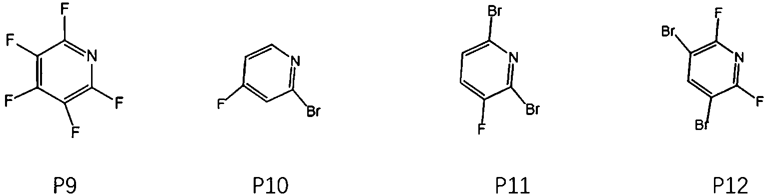 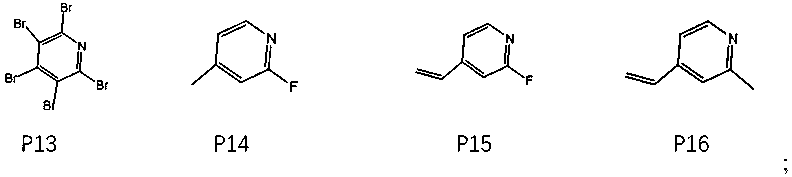
(k) the organic solvent comprises at least one selected from the group consisting of a carbonate solvent, a carboxylate solvent, and an ether solvent;
(l) the lithium salt comprises at least one selected from the group consisting of lithium hexafluorophosphate (LiPF₆), lithium difluorophosphate (LiPO₂F₂), lithium difluorobis(oxalato)phosphate (LiDFOP), lithium tetrafluoro(oxalato)phosphate (LiTFOP), lithium bis(oxalato)borate (LiBOB), lithium difluoro(oxalato)borate (LiDFOB), lithium tetrafluoroborate (LiBF₄), lithium bis(trifluoromethanesulfonyl)imide (LiTFSI), lithium bis(fluorosulfonyl)imide (LiFSI), and lithium 4,5-dicyano-2-(trifluoromethyl)imidazol-1-ide (LiTDI).

11. An electrical device, comprising the secondary battery according to any one of claims 1-10.
